# EUROPEAN PATENT APPLICATION

(11) **EP 4 438 975 A1**
(43) Date of publication of application: **02.10.2024**
(21) Application number: 24164948.2
(22) Date of filing: 20.03.2024
(51) Int. Cl.: F25B 1/00, F25B 5/02, F25B 40/02, F25B 41/40, F25B 43/00, B60H 1/32, B60H 1/00

(54) **REFRIGERATION SYSTEM AND REFRIGERATOR VAN HAVING THE SAME**

(30) Priority: 27.03.2023 CN 202310310666
(71) Applicant: Carrier Corporation, Palm Beach Gardens, FL 33418 (US)
(72) Inventor: XIE, Fei, Shanghai 201206 (CN); TIAN, Hai, Shanghai 201206 (CN); HE, Zheng, Shanghai 201206 (CN)
(74) Representative: Dehns

(57) **Abstract**

The present invention proposes a refrigeration system (100). The refrigeration system (100) comprises a compressor (110), a condenser (120), a reservoir (130), a throttling device (140), and an evaporator (150) connected in sequence through pipes, as well as a cooling device (160) for cooling high-temperature components (10). The cooling device (160) has a heat exchange container (161) and a flow pipe (162), where the heat exchange container (161) maintains fluid communication with the reservoir (130) through the flow pipe (162), and the heat exchange container (161) is used to absorb heat of the high-temperature components (10). The heat exchange container (161) receives liquid refrigerant from the reservoir (130) through the flow pipe (162), the liquid refrigerant in the heat exchange container (161) generates vapor after heat exchange with heat absorbed from the high-temperature components (10), and the vapor enters the reservoir (130) through the flow pipe (162), thus forming a circulation loop. The present invention also proposes a refrigerator van configured with a refrigeration system. The cooling device in the refrigeration system (100) can cool the high-temperature components (10) in an efficient and energy-saving manner.

## Description

### FIELD OF THE INVENTION

The present invention relates to the technical field of heat exchange, in particular to a refrigeration system, and further to a refrigerator van configured with the refrigeration system.

### BACKGROUND OF THE INVENTION

A refrigerator van usually refers to a closed transport van used to maintain the temperature of frozen or fresh goods, which is mainly used for transporting frozen food, vegetables and fruits, dairy products, drugs, and so on. The mechanical components (such as the engine) and electronic devices (such as the frequency converter, inverter, or transformer, etc.) inside the refrigerator van will generate a large amount of heat after long-term operation, so it is necessary to dissipate heat for these components.

At present, most of the components that need heat dissipation inside the refrigerator van are cooled by adding a fan or by setting up ventilation openings. However, this method not only has poor heat dissipation effect, but also low heat dissipation efficiency. In addition, the surface of the fan blade is prone to dust accumulation, which further increases the risk of fan failure. Another common way of heat dissipation is to add an additional cooling system inside the refrigerator van, where the cooling system generally consists of a heat exchanger, a pump device, a fan, and other components. The pump device pumps the high-temperature coolant that absorbs heat from the high-temperature components to the heat exchanger, and the fan blows ambient air to the heat exchanger for heat exchange. Although the cooling system has a high heat exchange efficiency, it is expensive and has a complex structure. In addition, the heat exchanger, pump device, and fan etc. inside the cooling system need to occupy a large amount of installation space inside the refrigerator van.

### SUMMARY OF THE INVENTION

In view of the above, the present invention provides a refrigeration system, so as to solve or at least alleviate one or more of the aforementioned problems and problems in other aspects existing in the prior art, or to provide an alternative technical solution for the prior art.

According to the solution of the present invention, a refrigeration system is provided, comprising: a compressor, a condenser, a reservoir, a throttling device, and an evaporator connected in sequence through pipes. The refrigeration system further comprises a cooling device for cooling high-temperature components, wherein the cooling device has a heat exchange container and a flow pipe, where the heat exchange container maintains fluid communication with the reservoir through the flow pipe, and the heat exchange container is used to absorb heat of the high-temperature components,
wherein, the heat exchange container receives liquid refrigerant from the reservoir through the flow pipe, the liquid refrigerant in the heat exchange container generates vapor after heat exchange with the heat absorbed from the high-temperature components, and the vapor enters the reservoir through the flow pipe, thus forming a circulation loop.

Optionally, the flow pipe has a first end and a second end, wherein the first end of the flow pipe is communicated with the heat exchange container and located at the top of the heat exchange container, the second end of the flow pipe is communicated with the reservoir and located at the bottom of the reservoir, and the heat exchange container is located below the reservoir.

Alternatively, the flow pipe comprises a first flow pipe and a second flow pipe,
wherein, the first flow pipe has a first end and a second end, where the first end of the first flow pipe is communicated with the heat exchange container and located above the liquid level of the heat exchange container, and the second end of the first flow pipe is communicated with the reservoir and located above the liquid level of the reservoir;
wherein, the second flow pipe is located below the first flow pipe and has a first end and a second end, where the first end of the second flow pipe is communicated with the heat exchange container and located below the liquid level of the heat exchange container, and the second end of the second flow pipe is communicated with the reservoir and located below the liquid level of the reservoir,
wherein, the heat exchange container receives the liquid refrigerant from the reservoir through the second flow pipe, the liquid refrigerant in the heat exchange container generates vapor after heat exchange with the heat absorbed from the high-temperature components, and the vapor enters the reservoir through the first flow pipe, thus forming a circulation loop.

Optionally, the first flow pipe and the second flow pipe are arranged horizontally, wherein the high-temperature components are at or near the same height as the bottom of the reservoir; or the bottom of the high-temperature components is lower than the bottom of the reservoir.

Optionally, the high-temperature components have a housing, the heat exchange container is fixed inside the housing of the high-temperature components, and the housing of the high-temperature components is provided with a through-hole for the flow pipe to pass through.

Alternatively, the high-temperature components have a housing, and the heat exchange container is fixed to the housing of the high-temperature components in a detachable manner, or is integrally formed with the housing of the high-temperature components.

Optionally, the refrigeration system further comprises a subcooler located between the reservoir and the throttling device.

Optionally, the reservoir is a gas-liquid separator.

Optionally, the flow pipe and the heat exchange container are both made of metal, rubber, or plastic.

In addition, according to the solution of the present invention, a refrigerator van configured with the aforementioned refrigeration system is further provided.

Optionally, the high-temperature components are at least one of an engine, a frequency converter, an inverter, or a transformer.

It can be appreciated that the cooling device of the refrigeration system according to the present invention may have a simple structure, may be easy to assemble and disassemble, and may generate power through the heat exchange of high-temperature components and the effect of liquid level difference to achieve the circulation flow of the refrigerant, thereby achieving the goals of energy conservation, emission reduction, and cost reduction. In addition, the cooling device of the refrigeration system may not occupy a large amount of installation space inside the refrigerator van.

### BRIEF DESCRIPTION OF THE DRAWINGS

The technical solution of the present invention will be described in further detail below in conjunction with the accompanying drawings and embodiments. However, it should be appreciated that these drawings are only designed for explanatory purposes and are intended to conceptually illustrate the structural configurations described herein, without the need to be drawn proportionally.
FIG. 1 illustrates, as an example, a structural schematic diagram of an embodiment of a refrigeration system;
FIG. 2 illustrates, as an example, a structural schematic diagram of another embodiment of a refrigeration system; and
FIG. 3 illustrates, as an example, a structural schematic diagram of yet another embodiment of a refrigeration system.

### DETAILED DESCRIPTION

The content of the present invention and the differences between the present invention and the prior art can be understood by referring to the accompanying drawings and the text. The technical solution of the present invention will be described in further detail below through the accompanying drawings and by enumerating some optional embodiments of the present invention. The same or similar reference signs in the drawings represent the same or similar components.

It should be noted that any technical features or solutions in the embodiments are one or several of multiple optional technical features or technical solutions. For brevity, it is neither possible to exhaustively enumerate herein all alternative technical features and technical solutions of the present invention, nor is it possible to emphasize that the implementation mode of each technical feature is one of the optional multiple implementation modes. Therefore, those skilled in the art should be aware that any technical means provided by the present invention can be substituted, or any two or more technical means or technical features provided by the present invention can be combined with each other to obtain a new technical solution.

Any technical feature or technical solution within the embodiments does not limit the scope of protection of the present invention. The scope of protection of the present invention should include any alternative technical solutions that are within the scope of the claims.

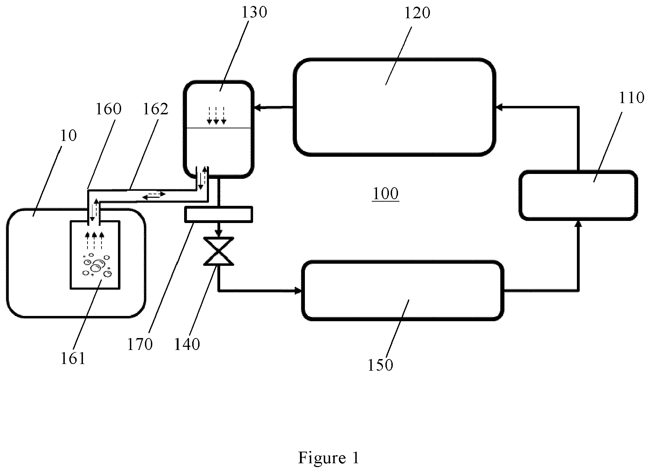

FIG. 1 schematically illustrates the structure of an embodiment of a refrigeration system according to the present invention in general. The refrigeration system 100 is composed of a compressor 110, a condenser 120, a reservoir 130, a throttling device 140, an evaporator 150, and other components that are connected in sequence through pipes. Among them, the reservoir 130 can be arranged as a gas-liquid separator downstream of the condenser 120 to receive the medium-temperature and high-pressure refrigerant fluid that has been condensed from the condenser 120, and further gas-liquid separation is carried out inside the reservoir 130. In order to make the refrigerant flowing through the throttling device 140 be in a liquid state as much as possible, the discharge port of the reservoir 130 is usually located at its bottom to prevent gaseous refrigerant from entering the throttling device 140, which will cause blockage of the orifice.

As can be clearly seen from FIG. 1, the refrigeration system 100 further comprises a cooling device 160 for cooling the high-temperature components 10. The cooling device 160 has a heat exchange container 161 and a flow pipe 162. The heat exchange container 161 maintains fluid communication with the reservoir 130 through the flow pipe 162, and the heat exchange container 161 is used to absorb heat of the high-temperature components. Specifically, the flow pipe 162 has a first end and a second end. The first end of the flow pipe 162 is communicated with the heat exchange container 161 and located at the top of the heat exchange container 161, the second end of the flow pipe 162 is communicated with the reservoir 130 and located at the bottom of the reservoir 130, and the heat exchange container 161 is located below the reservoir 130. The heat exchange container 161 receives the liquid refrigerant from the reservoir 130 through the flow pipe 162, the liquid refrigerant in the heat exchange container 161 exchanges heat with the heat absorbed from the high-temperature components to generate vapor, and the vapor enters the reservoir 130 through the flow pipe 162, thus forming a circulation loop (see the arrows in FIG. 1).

The working principle and operating mechanism of the cooling device 160 of the refrigeration system 100 is described in detail below in conjunction with FIG. 1.

Similar to the structure of a communicating vessel, the reservoir 130 and the heat exchange container 161 maintain liquid communication with each other through the flow pipe 162. And, the heat exchange container 161 is located below the reservoir 130, so that the liquid level in the reservoir 130 is always higher than the liquid level in the heat exchange container 161 under the action of gravity. After the liquid refrigerant in the heat exchange container 161 exchanges heat with the high-temperature components 10, the liquid refrigerant absorbs heat from the high-temperature components 10 and evaporates to produce small bubbles. During the evaporation process, the small bubbles gradually become larger and rise to the liquid level of the reservoir 130 through the flow pipe 162. After the bubbles burst, the vapor inside leaves the liquid and enters the upper gas space. During this period, the liquid level of the reservoir 130 gradually decreases. However, the vapor inside the heat exchange container 161 gradually condenses into liquid refrigerant above the liquid level of the reservoir 130 to increase the liquid level in the reservoir 130. As can be seen from the above, the power to drive the circulation flow of the refrigerant inside the cooling device entirely comes from the heat exchange of high-temperature components and the effect of liquid level difference, without the need for external power to drive the refrigerant to flow, thus further reducing energy consumption.

In conjunction with the above embodiment, in other optional embodiments, the refrigeration system 100 may further comprise a subcooler 170, which is located between the reservoir 130 and the throttling device 140 (see FIG. 1), thereby further improving the degree of supercooling of the liquid refrigerant.

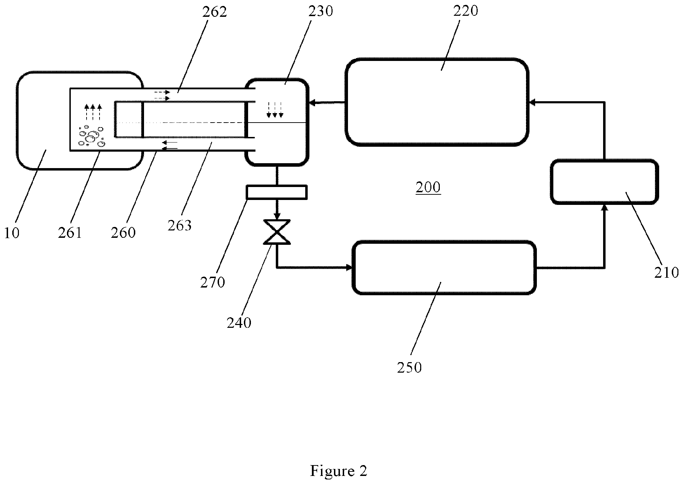

FIG. 2 schematically illustrates the structure of another embodiment of a refrigeration system according to the present invention in general. In the refrigeration system 200, reference can be made to the aforementioned embodiments for the arrangement of compressor 210, condenser 220, reservoir 230, throttling device 240, evaporator 250, and subcooler 270, which will not be repeated here. As can be clearly seen from FIG. 2, the cooling device 260 comprises a heat exchange container 261, a first flow pipe 262, and a second flow pipe 263. The heat exchange container 261 accommodates liquid refrigerant from the reservoir 230 and is used to absorb heat from the high-temperature components 10. The first flow pipe 262 has a first end and a second end, wherein the first end of the first flow pipe 262 is communicated with the heat exchange container 261 and is located above the liquid level of the heat exchange container 261, and the second end of the first flow pipe 262 is communicated with the reservoir 230 and is located above the liquid level of the reservoir 230. The second flow pipe 263 is located below the first flow pipe 262 and has a first end and a second end, wherein the first end of the second flow pipe 263 is communicated with the heat exchange container 261 and located below the liquid level of the heat exchange container 261, and the second end of the second flow pipe 263 is communicated with the reservoir 230 and located below the liquid level of the reservoir 230. The heat exchange container 261 receives the liquid refrigerant from the reservoir 230 through the second flow pipe 263, the liquid refrigerant in the heat exchange container 261 exchanges heat with the heat absorbed from the high-temperature components 10 to generate vapor, and the vapor enters the reservoir 230 through the first flow pipe 262, thus forming a circulation loop (see the arrows in FIG. 2).

The working principle and operating mechanism of the cooling device 260 of the refrigeration system 200 is described in detail below in conjunction with FIG. 2.

Similar to the structure of a communicating vessel, the reservoir 230 and the heat exchange container 261 maintain liquid communication with each other through the second flow pipe 263, so that the liquid level in the reservoir 230 is kept basically the same as the liquid level in the heat exchange container 261 under the action of gravity, as shown by the dashed line in FIG. 2. After the liquid refrigerant in the heat exchange container 261 exchanges heat with the high-temperature components 10, the liquid refrigerant absorbs heat from the high-temperature components 10 and evaporates to produce small bubbles. During the evaporation process, the small bubbles gradually become larger and rise to the liquid level. After the bubbles burst, the vapor inside leaves the liquid and enters the upper gas space. During this period, the liquid level of the heat exchange container 261 gradually decreases, and the liquid level of the reservoir 230 gradually increases. However, under the effect of the liquid level difference, the liquid refrigerant in the reservoir 230 will automatically replenish to the heat exchange container 261 until the liquid level in the reservoir 230 and the liquid level in the heat exchange container 261 become basically the same again. The vapor inside the heat exchange container 261 returns back to the reservoir 230 through the first flow pipe 262, and gradually condenses into liquid refrigerant above the liquid level of the reservoir 230 to increase the liquid level in the reservoir 230. As can be seen from the above, the power to drive the circulation flow of the refrigerant inside the cooling device entirely comes from the heat exchange of high-temperature components and the effect of liquid level difference, without the need for external power to drive the refrigerant to flow, thus saving energy consumption. In addition, the cooling device of the refrigeration system has a simple structure and low cost, and does not occupy a large amount of installation space.

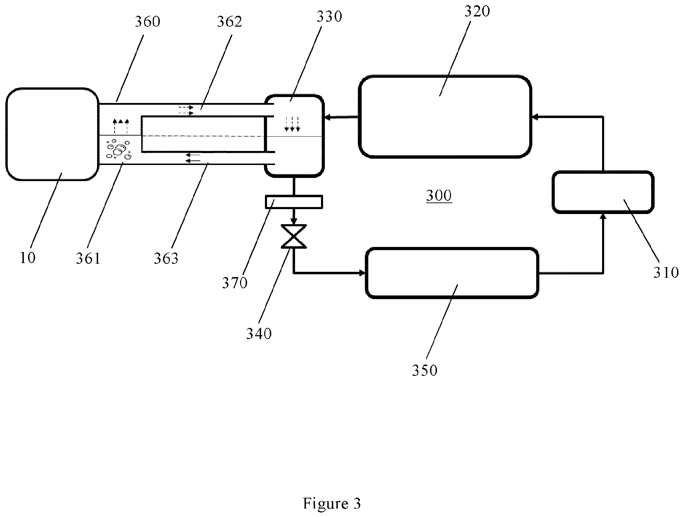

With continued reference to FIG. 2, the high-temperature components 10 have a housing, and the heat exchange container 261 is fixed inside the housing of the high-temperature components 10, thereby integrating the heat exchange container 261 with the high-temperature components 10. In order to smoothly install the heat exchange container 261 inside the housing of the high-temperature components 10, the housing of the high-temperature components 10 is provided with through holes for the first flow pipe 262 and the second flow pipe 263 to pass through. In addition, those skilled in the art would readily contemplate that the heat exchange container 361 can be fixed to the housing of the high-temperature components 10 in a detachable manner, such as through bolt connection (see FIG. 3). Alternatively, the heat exchange container 361 and the housing of the high-temperature components 10 can be designed as an integrated structure. When the high-temperature components 10 need to be repaired or replaced, the operator only needs to directly remove the high-temperature components 10 from the cooling device 360. In the refrigeration system 300 shown in FIG. 3, reference can be made to the aforementioned embodiments for the arrangement of compressor 310, condenser 320, reservoir 330, throttling device 340, evaporator 350, cooling device 360 that includes heat exchange container 361, first flow pipe 362 and second flow pipe 363, and subcooler 370, which will not be repeated here.

In the cooling device 260 of the refrigeration system 200 according to the present invention, the first flow pipe 262 and the second flow pipe 263 can be arranged horizontally, and the high-temperature components 10 are at or near the same height as the bottom of the reservoir 230. Of course, it is also feasible that the high-temperature components 10 are not at the same height as the bottom of the reservoir 230, as long as it is ensured that there is always liquid refrigerant inside the heat exchange container. For example, the bottom of the high-temperature components is arranged to be lower than the bottom of the reservoir, so that it easier for the refrigerant inside the reservoir to flow into the heat exchange container. In addition, the first flow pipe 262, the second flow pipe 263, and the heat exchange container 261 are all made of high-strength and corrosion-resistant metals, such as stainless steel, or made of low-cost materials such as rubber or plastic. And, the first flow pipe and the second flow pipe can be fixedly connected to the heat exchange container and the reservoir respectively by welding or bolt fastening.

In addition, the present invention further provides a refrigerator van configured with the aforementioned refrigeration system. The high-temperature components can be mechanical components, such as engines, or an electronic device, such as a frequency converter, an inverter, or a transformer. Those skilled in the art are aware that, on the one hand, the working temperature of the electronic devices usually needs to be controlled below 85^{°C} to ensure its normal operation; and on the other hand, the temperature of the refrigerant fluid received by the reservoir from the condenser is usually around 70^{°C} or lower, so the temperature of the refrigerant fluid is very conducive to cooling the electronic devices. In addition, it should be noted that it is impossible for the electronic device to have a working temperature lower than the ambient temperature, which avoids condensation of air inside the electronic device to produce condensed water which will cause damage to the electronic device, thus further improving the robustness of the electronic device.

If terms such as "first" and "second" are used herein to limit components, those skilled in the art should be aware that the use of "first" and "second" is only for the convenience of describing and distinguishing components. Unless otherwise stated, the above terms do not have any special meanings.

In addition, as to the terms used to indicate positional relationships or shapes in any of the technical solutions disclosed in the present invention, unless otherwise stated, the implications thereof include states or shapes that are approximate, similar, or close to them. Any component provided by the present invention can be either assembled from multiple individual components or manufactured as a separate component using an integration process.

If terms such as "center", "longitudinal", "transverse", "front", "back", "left", "right", "vertical", "horizontal", "top", "bottom", "inside", "outside", etc. are used in the depiction of the present invention, the orientations or positional relationships indicated by the above terms are based on the orientations or positional relationships shown in the drawings. These terms are used merely for the convenience of describing the present invention and simplifying the description, rather than indicating or implying that the device, mechanism, component or element referred to must have a specific orientation, be constructed and operated in a specific orientation, so they cannot be understood as forming limitations on the scope of protection of the present invention.

Last, it should be noted that the above embodiments are only used to illustrate the technical solution of the present invention but not to limit it. Although the present invention has been described in detail with reference to preferred embodiments, those skilled in the art, however, should understand that the specific embodiments of the present invention can still be modified or some technical features can be equivalently substituted. The scope of the present invention is therefore defined only by the following claims.

## Claims

1. A refrigeration system (100;200;300), comprising a compressor (110;210;310), a condenser (120;220;320), a reservoir (130;230;330), a throttling device (140;240;340), and an evaporator (150;250;350) connected in sequence through pipes, wherein the refrigeration system further comprises a cooling device (160;260;360) for cooling high-temperature components (10), the cooling device having a heat exchange container (161;261;361) and a flow pipe (162;262,263;362,363), where the heat exchange container maintains fluid communication with the reservoir through the flow pipe, and the heat exchange container is used to absorb heat of the high-temperature components,
wherein the heat exchange container receives liquid refrigerant from the reservoir through the flow pipe, the liquid refrigerant in the heat exchange container generates vapor after heat exchange with heat absorbed from the high-temperature components, and the vapor enters the reservoir through the flow pipe, thus forming a circulation loop.

2. The refrigeration system according to claim 1, wherein the flow pipe (162) has a first end and a second end, where the first end of the flow pipe is communicated with the heat exchange container and located at the top of the heat exchange container, the second end of the flow pipe is communicated with the reservoir and located at the bottom of the reservoir, and the heat exchange container is located below the reservoir.

3. The refrigeration system according to claim 1, wherein the flow pipe comprises a first flow pipe (262;362) and a second flow pipe (263;363),
wherein, the first flow pipe has a first end and a second end, where the first end of the first flow pipe is communicated with the heat exchange container and located above liquid level of the heat exchange container, and the second end of the first flow pipe is communicated with the reservoir and located above liquid level of the reservoir;
wherein, the second flow pipe is located below the first flow pipe and has a first end and a second end, where the first end of the second flow pipe is communicated with the heat exchange container and located below the liquid level of the heat exchange container, and the second end of the second flow pipe is communicated with the reservoir and located below the liquid level of the reservoir,
wherein, the heat exchange container receives the liquid refrigerant from the reservoir through the second flow pipe, the liquid refrigerant in the heat exchange container generates vapor after heat exchange with the heat absorbed from the high-temperature components, and the vapor enters the reservoir through the first flow pipe, thus forming a circulation loop.

4. The refrigeration system according to claim 3, wherein the first flow pipe and the second flow pipe are arranged horizontally, where the high-temperature components are at or near the same height as the bottom of the reservoir; or the bottom of the high-temperature components is lower than the bottom of the reservoir.

5. The refrigeration system according to any of claims 1-4, wherein the high-temperature components have a housing, the heat exchange container is fixed inside the housing of the high-temperature components, and the housing of the high-temperature components is provided with a through-hole for the flow pipe to pass through.

6. The refrigeration system according to any of claims 1-4, wherein the high-temperature components have a housing, and the heat exchange container is fixed to the housing of the high-temperature components in a detachable manner, or is integrally formed with the housing of the high-temperature components.

7. The refrigeration system according to any of any preceding claim, wherein the refrigeration system further comprises a subcooler (170;270;370) located between the reservoir and the throttling device.

8. The refrigeration system according to any preceding claim, wherein the reservoir is a gas-liquid separator.

9. The refrigeration system according to any preceding claim, wherein the flow pipe and the heat exchange container are both made of metal, rubber, or plastic.

10. A refrigeration van, wherein the refrigerator van is configured with the refrigeration system according to any of claims 1-9.

11. The refrigeration van according to claim 10, wherein the high-temperature components are at least one of an engine, a frequency converter, an inverter, or a transformer.
